# FASCICULE DE BREVET EUROPEEN

(11) **EP 2 431 899 B1**
(45) Date de publication et mention de la délivrance du brevet: **11.11.2015**
(21) Numéro de dépôt: 11180554.5
(22) Date de dépôt: 08.09.2011
(51) Int. Cl.: G06F 21/83, G07F 19/00

(54) **Dispositif de protection et procédé correspondant**
Schutzvorrichtung und entsprechendes Verfahren
Protection device and corresponding method

(30) Priorité: 15.09.2010 FR 1057387
(43) Date de publication de la demande: 21.03.2012
(73) Titulaire: Ingenico Group, 75015 Paris (FR)
(72) Inventeur: Rossi, Laurent, 28100 Dreux (FR); Schang, Bernard, 78320 Le Mesnil-Saint-Denis (FR)
(74) Mandataire: Vidon Brevets & Stratégie

(56) Documents cités:
- WO-A1-2009/103594
- FR-A1- 2 857 113
- US-A1- 2008 278 355
- US-B1- 6 390 367

## Description

### 1 DOMAINE DE L'INVENTION

La présente invention se rapporte au domaine de la sécurisation de dispositifs de paiement.

La présente invention se rapporte plus particulièrement à un dispositif permettant de détecter l'adjonction, sur un dispositif de paiement, de matériels ayant pour objectif l'obtention frauduleuse de données confidentielles, telles que des données bancaires.

De nombreux dispositifs permettent à des utilisateurs de régler des achats. Plus particulièrement, les dispositifs de paiement utilisant des cartes bancaires telles que des cartes à puce ou des cartes à bande magnétique se sont généralisés. Ces dispositifs sont généralement appelés terminaux de paiement et permettent de régler des achats de manière simple et rapide. D'autres dispositifs utilisent également les cartes à puce ou à bande : il s'agit par exemple de terminaux bancaires tels que des guichets automatisés ou des distributeurs automatiques de billets. Par la suite, l'ensemble de ces dispositifs, qui comprennent à la fois un clavier de saisie et un lecteur de carte à mémoire sont appelés terminaux de paiement.

Une des caractéristiques de ces terminaux de paiement est leur installation en extérieur. Plus précisément, ces terminaux sont souvent installés en extérieur, pour que les utilisateurs puissent avoir accès aux services de paiement en dehors d'horaires d'ouverture standards ou pour permettre aux utilisateurs d'effectuer les opérations souhaitées plus facilement et plus rapidement (opération de paiement, opération de consultation de solde bancaire, opérations de virement).

Ainsi, il est fréquent et très commun que ces terminaux, auxquels les clients font toute confiance, soient installés dans des environnements plus ou moins inadéquat compte tenus des données qui sont manipulées lors des opérations de paiement ou d'opérations de consultation.

En effet, l'installation à l'extérieur des terminaux de paiement a conduit à l'émergence d'un type de fraude appelé « collier marseillais ». Dans ce type de fraude, un faux clavier est installé par-dessus le clavier original du terminal de paiement (il s'agit de l'overlay « clavier »). Le distributeur automatique ou le guichet automatisé refuse alors de libérer la carte qui y est insérée.

Une autre technique, appelée le "skimming", consiste, à installer, sur la fente d'introduction d'un terminal un dispositif qui sert à décoder la piste magnétique ou à enregistrer les données de la puce de la carte bancaire (il s'agit de l'overlay « fente »). La pose d'un tel dispositif au niveau de la fente d'introduction de la carte s'accompagne souvent de la pose d'un faux clavier (overlay « clavier ») ou de la pose d'une caméra permettant de filmer le code confidentiel du porteur de carte au moment ou ce code est requis par le terminal de paiement. Les données lues par ce dispositif frauduleux sont directement transmises aux fraudeurs par l'utilisation d'un module GSM qui transmet les données à un terminal mobile GSM par l'intermédiaire d'un message de type SMS/MMS. Les fraudeurs réencodent ou copient les données sur une carte vierge qu'ils peuvent utiliser.

### 2 SOLUTIONS DE L'ART ANTÉRIEUR

Tous les fournisseurs de terminaux de paiement et un certain nombre de fournisseurs tiers sont en mesure de fournir des solutions anti-skimming plus ou moins efficace. Une équipe de test Européenne (European ATM Security Team) a établi et maintient une base de données de solutions anti-skimming et de leurs fonctionnalités. Toutefois, il n'existe actuellement pas de certification ou d'évaluation indépendante de ces solutions et certaines solutions sont plus efficaces que d'autres.

De nombreuses solutions ont ainsi été proposées pour pallier ces problèmes de sécurité posés par les terminaux de paiement, lorsqu'ils sont installés dans des environnements peu surs. Parmi ces solutions on peut citer la modification du terminal, par exemple en modifiant la forme du terminal. Cette modification de forme se traduit par l'adjonction de volumes spécifiques empêchant d'y accrocher ou d'y coller un dispositif frauduleux de lecture des données bancaires.

L'efficacité de cette solution est cependant toute relative. En effet, les fabricants de dispositifs frauduleux de lecture des données bancaires fabrique généralement ces dispositifs de manière artisanale et savent s'adapter aux contraintes spécifiques des terminaux sur lesquels les dispositifs doivent s'adapter. Il est donc très simple, pour les fabricants de dispositifs frauduleux de lecture des données bancaires, de modifier la forme de leurs dispositifs en fonction des terminaux de paiement.

Une autre solution qui a été proposée consiste à munir le terminal de capteurs de pressions, à des endroits déterminés du terminal. Ces capteurs de pressions sont supposés capter l'adjonction d'un dispositif frauduleux de lecture des données bancaires.

Là encore, l'adaptabilité dont font preuve les fabricants de dispositifs frauduleux ne permet pas d'assurer une fiabilité totale de cette solution.

Une autre solution consiste à munir le terminal de paiement d'un dispositif de brouillage qui perturbe la transmission de données émises depuis un éventuel dispositif frauduleux. Une autre solution consiste à munir le clavier d'un cache spécifique assurant que le code confidentiel saisi par le porteur de la carte bancaire ne pourra pas être enregistré, lors de la frappe, par une caméra dissimulée à côté ou sur le terminal de paiement.

Le brevet FR2857113, qui se rapporte au domaine de l'invention, décrit un boîtier sécurisé renfermant un clavier permettant d'introduire des données confidentielles telles qu'un numéro d'identification personnel destinées en particulier à un système de paiement électronique sécurisé sous les aspects mécanique, électronique et émission électromagnétique. Il comporte une matrice tactile capacitive reliée d'une part par des fils de liaison à une carte de circuit imprimé portant le contrôleur associé, un module de sécurité ainsi qu'une électronique sensible aux variations de la capacité du système, et prise d'autre part en sandwich entre deux plaques de verre, à savoir une plaque de verre avant ou plaque de protection et une plaque de verre arrière ou plaque de support. Le problème de la solution apportée par le brevet FR2857113 est d'une part qu'elle ne s'applique pas à la pose de clavier mécanique (le clavier protégé dans le brevet FR2857113 est un clavier numérique, affiché sur un écran tactile). D'autre part, le système de FR2857113 ne permet pas de résoudre les problèmes liés à la dépose d'un système au niveau de la fente du terminal de paiement. Finalement, la solution proposée par le brevet FR2857113 est coûteuse et complexe à mettre en oeuvre.

La demande de brevet WO 2009/103594 divulgue un clavier ayant une pluralité de touches et une pluralité d'éléments capacitifs qui sont associés à des emplacements de touches. Cependant, la disposition de la pluralité d'éléments capacitifs est compliquée et nécessite une modification de configuration du circuit imprimé.

La demande de brevet US 2008/278355 concerne un dispositif de détection capacitif destiné à équiper les PED (PIN Entry Device). Ce dispositif est équipé d'un détecteur en forme de grille, qui est placé autour des touches du PED. La solution apportée par la demande US 2008/278355 ne permet de détecter les dispositifs intrusifs latéralement placés entre les touches. Elle est en plus compliquée et couteuse à mettre en oeuvre.

A ce jour aucune solution n'a permis de résoudre totalement ce problème, à un coût jugé raisonnable. Or il est important de fournir des terminaux de paiement dans lesquels les utilisateurs peuvent avoir confiance, terminaux qui ne soient pas pour autant trop onéreux à produire.

### 3 RÉSUMÉ DE L'INVENTION

L'invention ne présente pas les inconvénients de l'art antérieur. En effet, l'invention concerne un dispositif de protection d'un terminal de paiement électronique et un procédé de protection d'un terminal. Ces objets sont mis en oeuvre tels que décrits dans les revendications. D'autres particularités de l'invention sont décrites dans les revendications dépendantes.

Ainsi, l'invention permet de sentir l'adjonction de dispositifs frauduleux sur le terminal de paiement. En effet, l'une des caractéristiques des matériels frauduleux, quel que soit leur forme, est qu'ils comprennent une quantité non négligeable de métal et de matériaux conducteurs. L'adjonction de dispositifs frauduleux entraîne donc modification de la quantité de charge électrique stockée pour un potentiel électrique donné, potentiel qui est dans le cadre de l'invention, le détecteur capacitif disposés aux emplacements prédéfinis.

Cette invention améliore ainsi la sécurité du terminal de paiement et plus particulièrement protège plus efficacement contre les attaques connues dites « overlay » ou « collier Marseillais » du terminal de paiement.

Il permet de lutter efficacement contre la pose de dispositifs frauduleux sur le clavier et/ou sur la fente d'insertion de carte à puce dans le but de frauder.

### 4 DESCRIPTION DÉTAILLÉE DE L'INVENTION

### 4.1 Description d'un mode de réalisation

Le principe de l'invention consiste à mettre en oeuvre une détection d'une modification excessive de capacité électrique à l'intérieur du terminal de paiement.

L'invention propose ainsi de détecter une modification de la capacité (c'est-à-dire une modification de la charge électrique) contenue dans un ou plusieurs détecteurs capacitifs disposés à des emplacements particuliers dans le terminal de paiement : sous le clavier et au niveau de la fente d'introduction de la carte.

Pour ce faire, le dispositif selon l'invention comprend au moins un détecteur capacitif disposé entre une plaque de support des touches du clavier mécanique du terminal de paiement et un support définissant les points de pression des touches du clavier. Ce détecteur capacitif comprend une capacité préalablement déterminée et connue d'un microprocesseur de mesure capacitive, relié électriquement au détecteur capacitif, et configuré pour détecter une variation de capacité du détecteur capacitif. Le dispositif comprend également des moyens de transmission d'une information représentative de variation de capacité, lorsque une valeur absolue d'une différence entre une capacité mesurée, à un instant donné et la capacité de référence excède un seuil également prédéterminé.

Le détecteur capacitif est simplement posé sous les touches du clavier mécanique. La pose du détecteur capacitif est donc une opération simple et peu coûteuse, qui ne nécessite pas la construction d'une structure de support ou d'un dispositif particulier.

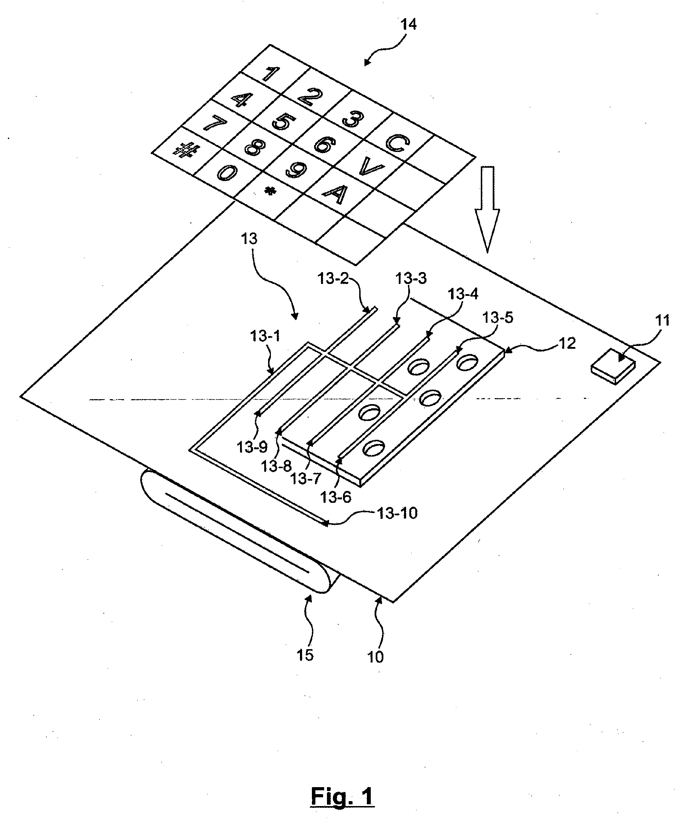

Le détecteur capacitif se caractérise, dans un premier mode de réalisation, par une forme adaptée à une pose entre les orifices permettant l'actionnement des touches du clavier en dessous duquel il prend place, tel que décrit en relation avec la figure 1.

Plus particulièrement, la figure 1 décrit un circuit imprimé multicouches 10 (également appelé PCB) sur lequel sont disposés des composants électroniques 11 qui peuvent être montés en surface (CMS) ou soudés sur le circuit imprimé.

Un élément de support mécanique inférieur 12 contenant les éléments d'appui sur les points de pression des touches du clavier prend également place sur le circuit imprimé 10. Ce support est monté sur le circuit imprimé lors de la fabrication du terminal. Selon l'invention, le détecteur capacitif 13 est posé sur l'élément de support mécanique 12. Le détecteur capacitif 13 est relié électriquement au microprocesseur de mesure capacitive (non représenté). Lors du montage du terminal de paiement, la plaque de support des touches du clavier 14, qui constitue l'élément de support mécanique supérieur 14, cache le détecteur capacitif 13 qui est ainsi invisible tant des utilisateurs autorisés que des fraudeurs.

Selon l'invention, le détecteur capacitif 13 a la forme générale d'un râteau (13-1) comprenant une pluralité de dents (13-2 à 13-9). Il se caractérise plus particulièrement par le fait qu'il est configuré pour se conformer à l'emplacement des touches du clavier. Plus particulièrement, la forme du détecteur capacitif 13 est définie de telle sorte que les dents (13-2, 13-9) n'obstruent pas les orifices de l'élément de support mécanique 12 des points de pression (qu'il s'agisse des orifices des vraies touches ou des fausses touches, destinées à mettre en oeuvre une autre mesure de protection du terminal). En effet, les mesures prises pour protéger les terminaux étant de plus en plus nombreuses, il est nécessaire, pour que le terminal fonctionne correctement, que les dispositifs de protection insérés au sein des terminaux n'interfèrent pas.

Selon une autre caractéristique de l'invention, le détecteur capacitif 13 comprend en outre une dent complémentaire (13-10) destinée, lorsque le terminal de paiement au sein duquel le dispositif de l'invention est assemblé, à être positionnée parallèlement à la fente d'introduction 15 de la carte (carte de paiement, carte d'accès, etc.). Cette caractéristique permet, avec un seul détecteur capacitif 13, de remplir à la fois la fonction de détection de pause de faux clavier et à la fois la fonction de détection de pause de faux lecteur de carte. Ainsi, il n'est pas nécessaire de prévoir deux détecteurs capacitifs. Comme un seul support suffit à remplir les deux fonctions, il n'est en outre pas nécessaire de prévoir deux calibrations différentes, ce qui facilite encore la mise en oeuvre du dispositif par rapport aux dispositifs de l'art antérieur et réduit donc son coût.

### 4.2 Paramétrage initial

Pour pouvoir rendre le service escompté, le dispositif de l'invention doit être paramétré afin de déterminer la valeur prédéterminée de la capacité de référence. Cette capacité de référence permet, comme cela a déjà été explicité, de contrôler la variation de capacité au cours du temps et de déterminer si cette variation excède une valeur prédéterminée.

A la première mise sous tension du terminal de paiement au sein duquel le dispositif de l'invention est monté, une mesure de calibrage et un paramétrage est réalisé afin d'identifier la valeur de référence, au repos dans un environnement électromagnétique neutre, de la capacité du détecteur capacitif.

Par la suite ce calibrage initial établit la capacité de référence. En mode de fonctionnement standard, une variation de la capacité mesurée par rapport à a capacité de référence est bien entendu admise, pour permettre un fonctionnement normal du terminal de paiement.

Une valeur dite « delta » fixe les limites supérieures et inférieures dans lesquelles les capacités mesurées seront considérées comme valides. Les mesures sont effectuées périodiquement, soit à intervalle régulier, soit à des horaires prédéfinis (comme la nuit par exemple).

En effet, les inventeurs ont constaté que les fraudes par la pose de dispositifs frauduleux sont généralement effectuées sur de courtes périodes temporelles (par exemple le faux clavier et le dispositif de lecture de cartes) : de l'ordre de la demi heure. Une telle pratique, de la part des fraudeurs, s'explique par le fait que les fraudeurs sont fréquemment physiquement présents dans une zone très proche de celle où le terminal de paiement cible de la fraude est installé et qu'il est nécessaire qu'il puisse intervenir rapidement sur ce terminal. Ainsi, pour ne pas être remarqué, la durée de la fraude est souvent restreinte.

Pour pouvoir contrer la fraude, il est donc nécessaire de réaliser les mesures aux moments ou la fraude est susceptible d'intervenir. Ainsi, il est également possible de configurer le dispositif pour définir des plages de mesures adaptées à la localisation finale du terminal de paiement. Par exemple, s'il s'agit d'une station service, les mesures seront plutôt réalisées la nuit, de manière répétée ou en continue puisque c'est la nuit que le terminal de paiement est laissé sans surveillance.

En cas de coupure de l'alimentation électrique provenant du secteur, les organes de sécurité du terminal continuent de fonctionner sur batterie. Dans ce cas un système d'endormissement et de réveil périodique du processeur « capacitif » permet une mesure régulière des détecteurs capacitifs (comme par exemple toutes les 500 millisecondes).

En effet, comme le dispositif de l'invention consomme très peu de courrant électrique, il peut être mis en oeuvre sans la présence d'une alimentation électrique en provenance du secteur. Ainsi, le système de l'invention peut assurer la sécurité du terminal de façon continu avec ou sans la présence du courant secteur.

Sous certaines conditions strictes, un système de compensation environnemental peut modifier la valeur de référence (Baseline). Un tel système peut être adjoint au dispositif de l'invention pour assurer un bon fonctionnement du terminal de paiement en fonction de l'environnement dans lequel il est installé.

Un filtrage logiciel est également effectué pour discriminer les événements modifiant les lignes de champ qui ne sont pas des déposes réelles de dispositifs frauduleux (manipulations du terminal, etc.).

Toutes les mesures sont pilotées par l'intermédiaire d'un microprogramme associé au microprocesseur de mesure capacitive.

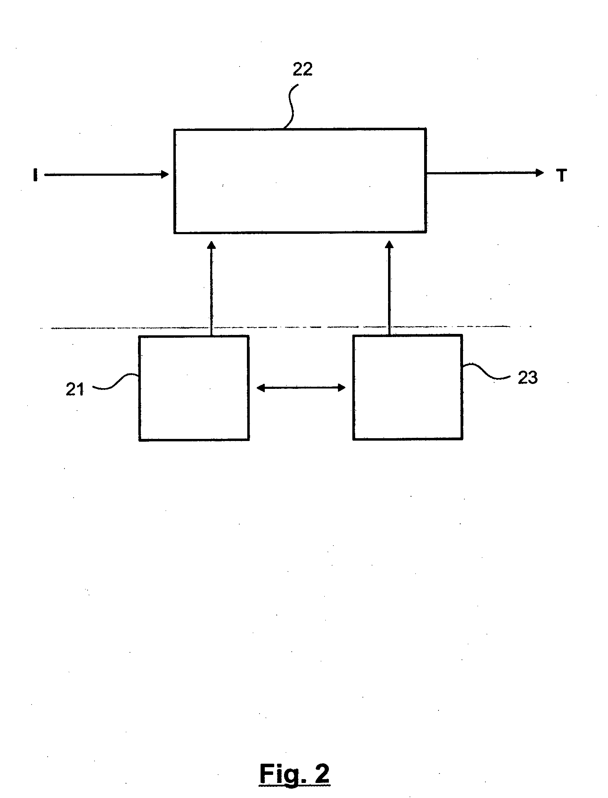

On présente, en relation avec la figure 2, un mode de réalisation d'un terminal de paiement selon l'invention.

Un tel terminal comprend une mémoire 21 constituée d'une mémoire tampon, une unité de traitement 22, équipée par exemple d'un microprocesseur P, et pilotée par le programme d'ordinateur 23, mettant en oeuvre le procédé de protection selon l'invention.

A l'initialisation, les instructions de code du programme d'ordinateur 23 sont par exemple chargées dans une mémoire RAM avant d'être exécutées par le processeur de l'unité de traitement 22. L'unité de traitement 22 reçoit en entrée au moins une information I, telle que des identifiants de zones de localisation. Le microprocesseur de l'unité de traitement 22 met en oeuvre les étapes du procédé de protection décrit précédemment, selon les instructions du programme d'ordinateur 23, pour délivrer une information traitée T, telle que la détection d'une attaque entraînant la suppression des données protégées. Pour cela, le terminal comprend, outre la mémoire tampon 21 :
- au moins un détecteur capacitif disposé entre un élément de support mécanique inférieur d'un clavier dudit terminal et un élément de support mécanique supérieur dudit clavier dudit terminal, ledit au moins un détecteur étant configuré pour délivrer une capacité de référence ;
- un microprocesseur de mesure capacitive relié électriquement audit au moins un détecteur capacitif, configuré pour détecter une variation de capacité dudit au moins un support de mesure capacitive ;
- des moyens de transmission d'une information représentative de ladite variation de capacité, lorsque une valeur absolue d'une différence entre ladite capacité mesurée et ladite capacité de référence excède un seuil prédéterminé.

Ces moyens sont pilotés par le microprocesseur de l'unité de traitement.

## Revendications

1. Dispositif de protection d'un terminal de paiement électronique, le dispositif comprenant :
- au moins un détecteur capacitif (13) disposé entre un élément de support mécanique inférieur (12) d'un clavier dudit terminal et un élément de support mécanique supérieur (14) dudit clavier dudit terminal, ledit au moins un détecteur étant configuré pour délivrer une capacité de référence ;
- un microprocesseur de mesure capacitive relié électriquement audit au moins un détecteur capacitif (13), configuré pour détecter une variation de capacité dudit au moins un détecteur capacitif (13) ;
- des moyens de transmission d'une information représentative de ladite variation de capacité, lorsque une valeur absolue d'une différence entre ladite capacité mesurée et ladite capacité de référence excède un seuil prédéterminé,
ledit détecteur capacitif (13) étant conformé de sorte qu'il s'étende entre des orifices dudit élément de support mécanique inférieur (12),
ledit dispositif de protection étant **caractérisé en ce que** ledit détecteur capacitif (13) a la forme générale d'un râteau (13-1) comprenant une pluralité de dents (13-2 à 13-9).

2. Dispositif de protection selon la revendication 1, **caractérisé en ce qu'**il comprend en outre des moyens de calibrage délivrant ladite capacité de référence.

3. Dispositif selon la revendication 1, **caractérisé en ce que** ledit détecteur capacitif (13) comprend en outre une dent complémentaire (13-10) qui, lorsque le terminal de paiement au sein duquel le dispositif de l'invention est assemblé, est positionnée parallèlement à la fente d'introduction de carte au sein dudit terminal.

4. Procédé de protection d'un terminal de paiement électronique comprenant au moins un circuit imprimé (10), un dispositif de protection et un boîtier, ledit dispositif de protection comprenant :
- au moins un détecteur capacitif (13) disposé entre un élément de support mécanique inférieur (12) d'un clavier dudit terminal et un élément de support mécanique supérieur (14) dudit clavier dudit terminal, ledit au moins un détecteur étant configuré pour délivrer une capacité de référence ;
- un microprocesseur de mesure capacitive relié électriquement audit au moins un détecteur capacitif (13), configuré pour détecter une variation de capacité dudit au moins un détecteur capacitif (13) ;
- des moyens de transmission d'une information représentative de ladite variation de capacité, lorsque une valeur absolue d'une différence entre ladite capacité mesurée et ladite capacité de référence excède un seuil prédéterminé
ledit détecteur capacitif (13) étant conformé de sorte qu'il s'étende entre des orifices dudit élément de support mécanique inférieur (12), ledit détecteur capacitif (13) ayant la forme générale d'un râteau (13-1) comprenant une pluralité de dents (13-2 à 13-9),
ledit procédé de protection étant **caractérisé en ce qu'**il comprend au moins une itération des étapes suivantes :
- mesure d'une capacité courante à l'aide dudit détecteur capacitif (13) ;
- calcul de ladite valeur absolue d'une différence entre ladite capacité mesurée et ladite capacité de référence ;
- transmission de ladite information représentative de ladite variation de capacité, lorsque ladite valeur absolue excède ledit seuil prédéterminé.

5. Procédé selon la revendication 4, **caractérisé en ce qu'**il comprend en outre, lors d'une première mise sous tension dudit terminal de paiement électronique, une étape de calibrage dudit terminal délivrant ladite capacité de référence.

## Patentansprüche

1. Vorrichtung zum Schutz eines elektronischen Zahlungsterminals, wobei die Vorrichtung Folgendes umfasst:
- mindestens einen kapazitiven Detektor (13), der zwischen einem unteren mechanischen Schutzelement (12) einer Tastatur des Terminals und einem oberen mechanischen Stützelement (14) der Tastatur des Terminals angeordnet ist, wobei der mindestens eine Detektor ausgestaltet ist, um eine Bezugskapazität zu liefern;
- einen Mikroprozessor zur kapazitiven Messung, der elektrisch mit dem mindestens einen kapazitiven Detektor (13) verbunden ist, der ausgestaltet ist, um eine Kapazitätsveränderung des mindestens einen kapazitiven Detektors (13) zu ermitteln;
- Mittel zur Übertragung einer Information, die für die Kapazitätsveränderung charakteristisch ist, wenn ein Absolutwert einer Differenz zwischen der gemessenen Kapazität und der Bezugskapazität einen vorbestimmten Schwellenwert überschreitet,
wobei der kapazitive Detektor (13) derart angepasst ist, dass er sich zwischen Öffnungen des unteren mechanischen Stützelements (12) erstreckt,
wobei die Schutzvorrichtung **dadurch gekennzeichnet ist, dass** der kapazitive Detektor (13) die allgemeine Form eines Rechens (13-1) aufweist, der mehrere Zähne (13-2 bis 13-9) aufweist.

2. Schutzvorrichtung nach Anspruch 1, **dadurch gekennzeichnet, dass** sie ferner Kalibrierungsmittel umfasst, die die Bezugskapazität liefern.

3. Vorrichtung nach Anspruch 1, **dadurch gekennzeichnet, dass** der kapazitive Detektor (13) ferner einen zusätzlichen Zahn (13-10) aufweist, der, wenn das Zahlungsterminal, in dem die erfindungsgemäße Vorrichtung zusammengebaut ist, parallel zum Schlitz zum Einführen der Karte in das Terminal positioniert ist.

4. Verfahren zum Schutz eines elektronischen Zahlungsterminals, das mindestens eine gedruckte Schaltung (10), eine Schutzvorrichtung und ein Gehäuse umfasst,
wobei die Schutzvorrichtung Folgendes umfasst:
- mindestens einen kapazitiven Detektor (13), der zwischen einem unteren mechanischen Stützelement (12) einer Tastatur des Terminals und einem oberen mechanischen Stützelement (14) der Tastatur des Terminals angeordnet ist, wobei der mindestens eine Detektor ausgestaltet ist, um eine Bezugskapazität zu liefern;
- einen Mikroprozessor zur kapazitiven Messung, der elektrisch mit dem mindestens einen kapazitiven Detektor (13) verbunden ist, der ausgestaltet ist, um eine Kapazitätsveränderung des mindestens einen kapazitiven Detektors (13) zu ermitteln;
- Mittel zur Übermittlung einer Information, die für die Kapazitätsveränderung charakteristisch ist, wenn ein Absolutwert einer Differenz zwischen der gemessenen Kapazität und der Bezugskapazität einen vorbestimmten Schwellenwert überschreitet;
wobei der kapazitive Detektor (13) derart angepasst ist, dass er sich zwischen Öffnungen des unteren mechanischen Stützelements (12) erstreckt, wobei der kapazitive Detektor (13) die allgemeine Form eines Rechens (13-1) aufweist, der mehrere Zähne (13-2 bis 13-9) umfasst,
wobei das Schutzverfahren **dadurch gekennzeichnet ist, dass** es mindestens eine Iteration der folgenden Schritte umfasst:
- Messen einer gegenwärtigen Kapazität mittels des kapazitiven Detektors (13);
- Berechnung des Absolutwerts einer Differenz zwischen der gemessenen Kapazität und der Bezugskapazität;
- Übermitteln der Information, die für die Kapazitätsveränderung charakteristisch ist, wenn der Absolutwert den vorbestimmten Schwellenwert überschreitet.

5. Verfahren nach Anspruch 4, **dadurch gekennzeichnet, dass** es ferner bei einem ersten Einschalten des elektronischen Zahlungsterminals einen Schritt zum Kalibrieren des Terminals umfasst, der die Bezugskapazität liefert.

## Claims

1. Device for protecting an electronic payment terminal comprising:
- at least one capacitive detector 13 placed between a lower mechanical supporting element 12 of a keypad of said terminal and an upper mechanical supporting element 14 of said keypad of said terminal, said at least one detector being configured to deliver a reference capacitance;
- a capacitive measurement microprocessor electrically connected to said at least one capacitive detector 13, configured to detect a variation of capacitance of said at least one capacitive measurement support;
- means for transmitting a piece of information representing said capacitive variation, when an absolute value of a difference between said measured capacitance and said reference capacitance exceeds a predetermined threshold **characterized in that** said capacitive detector 13 is conformed so that it extends between the holes of said lower mechanical supporting element 12 and **in that** said capacitive detector (13) has the general shape of a rake (13-1) with a plurality of teeth (13-2 to 13-9).

2. Device for protecting according to claim 1, **characterized in that** it further comprises calibration means delivering said reference capacitance.

3. Device according to claim 1, **characterized in that** said capacitive detector (13) further comprises an additional tooth (13-10) which, when the device of the invention is assembled in the payment terminal, is positioned parallel to the slot used for inserting the card into said terminal.

4. Method for protecting an electronic payment terminal comprising at least one printed circuit 10 and one case, said protection device comprising:
- at least one capacitive detector 13 positioned between a lower mechanical supporting element 12 of a keypad of said terminal and an upper mechanical supporting element 14 of said keypad of said terminal, said at least one detector being configured to deliver a reference capacitance;
- a capacitive measurement microprocessor electrically connected to said at least one capacitive detector 13, configured to detect a variation in the capacitance of said at least one capacitive measurement support;
- means for transmitting a piece of information representing said variation of capacitance when an absolute value of a difference between said measured capacitance and said reference capacitance exceeds a predetermined threshold, said capacitive detector 13 being conformed so that it extends between the holes of said lower mechanical supporting element 12 and in that said capacitive detector (13) has the general shape of a rake (13-1) with a plurality of teeth (13-2 to 13-9),
said method for protecting being **characterized in that** it comprises at least one iteration of the following steps:
- measuring of a current capacitance by means of said capacitive detector 13;
- computing said absolute value of a difference between said measured capacitance and said reference capacitance;
- transmitting said piece of information representing said variation in capacitance when said absolute value exceeds said predetermined threshold.

5. Method according to claim 4, **characterized in that** it further comprises, during a first powering-on of said electronic payment terminal, a step for calibrating said terminal delivering said reference capacitance.
